(19) Europäisches Patentamt
European Patent Office
Office européen des brevets

(11) Veröffentlichungsnummer: **0 330 037 B1**

(12) **EUROPÄISCHE PATENTSCHRIFT**

(45) Veröffentlichungstag der Patentschrift: **21.04.93**

(51) Int. Cl.$^5$: **C08G 81/02**, C08G 63/00, C08G 69/44

(21) Anmeldenummer: **89102425.9**

(22) Anmeldetag: **13.02.89**

Die Akte enthält technische Angaben, die nach dem Eingang der Anmeldung eingereicht wurden und die nicht in dieser Patentschrift enthalten sind.

# (54) Thermoplastische Blockcopolymere aus carboxylgruppenhaltigem Polypropylen einerseits und vollaromatischen Polyestern, Polyestercarbonaten oder Polyesteramiden andererseits.

(30) Priorität: **25.02.88 DE 3805856**

(43) Veröffentlichungstag der Anmeldung:
**30.08.89 Patentblatt 89/35**

(45) Bekanntmachung des Hinweises auf die Patenterteilung:
**21.04.93 Patentblatt 93/16**

(84) Benannte Vertragsstaaten:
**DE FR GB IT NL**

(56) Entgegenhaltungen:
**EP-A- 0 248 261**
**EP-A- 0 253 196**
**EP-A- 0 259 868**
**FR-A- 1 521 223**

**MAKROMOL. CHEM., Band 182, 1981, Seiten 989-995; M. GERVAIS et al.: "Lamellar crystalline structure of block copolymers with an amorphous and a crystallizable block: Effect of the nature of the crystallizable block"**

(73) Patentinhaber: **BAYER AG**

**W-5090 Leverkusen 1 Bayerwerk(DE)**

(72) Erfinder: **Pielartzik, Harald, Dr.**
**Doerperhofstrasse 39**
**W-4150 Krefeld(DE)**
Erfinder: **Meurer, Kurt Peter, Dr.**
**Am Krahfeld 1**
**W-5330 Königswinter 21(DE)**
Erfinder: **Meyer, Rolf-Volker, Dr.**
**Buchheimer Strasse 23**
**W-4150 Krefeld(DE)**
Erfinder: **Witte, Josef, Dr.**

**verstorben(DE)**



Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft thermoplastische Blockcopolymere aus carboxylgruppenhaltigem Polypropylen und Segmenten aus flüssigkristallinen Polymeren.

EP-A-259 868 ist ein Dokument gemäß Art. 54(3) EPÜ und beschreibt Blockcopolymere aus Polyestersegmenten und Vinylpolymer-Segmenten, welche radikalisch polymerisierbar sind. EP-A-248 261 beschreibt Polyolefincarbonsäuren ihre Herstellung und Verwendung zur Herstellung von Polyolefin/Polycarbonat Blockcopolymeren. EP-A-253 196 beschreibt thermotrope aromatische Polyester/Polysulfon Blockcokondensate. Blockcopolymere aus carboxylgruppenhaltigem Polypropylen und flüssigkristallinen Polymeren werden nicht erwähnt.

Flüssigkristalline Homopolymere sind bekannt (z.B. A. Cifferi in W.R. Krigbaum, R.B. Mayer Polymer Liquid Crystals, Academic Press 1982; J. Preston in A. Blumstein, Liquid Crystalline Order in Polymers Academic Press 1978).

Als "thermotrop" bzw. "flüssigkristallin" bezeichnet man solche Substanzen, die flüssigkristalline Schmelzen bilden. Thermotrope Polykondensate sind hinreichend bekannt, vgl. z.B.:

F.E. Mc Farlane et al, Liquid Crystal Polymers II, Contemporary Topics in Polymer Science, Vol. 2, Plenum Publishing Corporation 1977;

W.J. Jackson und H.F. Kuhfuss, J. Polymer, Polymer Chem. Ed. 14, 2042 (1976);

W.C. Wooten et al in A. Cifferi "Ultra-high Modules Polymers", Applied Science Publ., London 1979, S. 362 ff.;

A. Blumstein et al., "Liquid Crystalline Order in Polymers", Academic Press 1978;

J. Preston, Angew. Makromol. Chem. 109/110, S. 1-19 (1982);

A. Cifferi, W.R. Krigbaum, R.B. Meyer "Polymer Liquid Crystals", Academic Press, New York, 1982;

EP 1185, 1340, 8855, 11 640, 15 856, 17 310, 18 145, 18 709, 22 344, 44 205, 49 615;

US 39 91 013, 39 91 014, 40 66 620, 40 67 852, 40 83 829, 41 07 143, 42 26 970, 42 32 143, 42 32 144, 42 45 082, 42 69 965, 43 35 232, 43 81 389, 43 99 270, 43 98 015, 44 47 592, 45 00 699;

JP 59/1 26 431;

WO 79/792, 79/1 030, 79/1 040.

Der flüssigkristalline Zustand von Polymerschmelzen läßt sich mit Hilfe eines Polarisationsmikroskops untersuchen: Für die Untersuchungen war das Okular mit einem Aufsatz ausgerüstet, der eine Fotodiode im Brennpunkt der Okularlinse angeordnet enthielt. Anhand eines nachgeschalteten Meßverstärkers mit Regeleinrichtung wurde der Meßwert am eingeschalteten Mikroskop bei parallel angeordneten Nicolschen Prismen in Abwesenheit einer Materialprobe auf 100 Skalenteile eingestellt. Bei gekreuzten Nicolschen Prismen ergab sich dann ein Wert von 0,01 Skalenteilen.

Die Untersuchung der Polykondensate erfolgt nach dem Aufschmelzen der Proben bei Temperaturen zwischen 280 und 400 °C. Sofern in diesem gesamten Bereich oder in einem Teil davon eine Aufhellung der zwischen den gekreuzten Nicolschen Prismen beobachteten Schmelze auftrat, wurde das Polykondensat als thermotrop flüssigkristallin eingestuft.

Die flüssigkristallinen Polykondensate zeigen in der Maßanordnung Werte über 1 Skalenteil, meist Werte von 3 bis 90 Skalenteilen. Für amorphe Schmelzen, z.B. aromatische Polycarbonate, wurden dagegen Werte von weniger als 0,1 Skalenteile gefunden.

Die oben beschriebene Methode ist für eine Schnellbestimmung im Laboratorium besonders geeignet und liefert in nahezu allen Fällen zweifelsfreie Ergebnisse. In Zweifelsfällen kann es dagegen sinnvoll sein, das Vorhandensein flüssigkristalliner Komponenten mittels Röntgenweitwinkelstreuung in der Schmelze nachzuweisen, wie es z.B. bei G.W. Gray und P.A. Windsor, "Plastic Crystals, Physico-Chemical Properties and Methods of Investigation", insbesondere Chapter 3, John Wiley and Sons, New York, Sydney, Toronto 1974, beschrieben ist.

Aus der europäischen Offenlegungsschrift 00 30 417 sind Blends aus Vinylpolymeren und flüssigkristallinen Polymeren bekannt, die durch physikalisches Abmischen hergestellt werden. Bei den in der angeführten europäischen Offenlegungsschrift beschriebenen Blends handelt es sich, wie bereits erwähnt, um physikalische Abmischungen der jeweiligen Komponenten, d.h. ohne kovalente Bindungen zwischen den Polyolefinen oder Polyvinylaromaten und den Segmenten der flüssigkristallinen Polymeren. Aus diesem Grund kann eine prinzipielle Unverträglichkeit zwischen diesen stark unterschiedlichen Polymeranteilen nicht verhindert werden. Das äußert sich beispielsweise an den unbefriedigenden mechanischen Eigenschaften solcher Mischungen, wie eigene Versuche zeigten.

Gegenstand der Erfindung sind nun thermoplastische Blockcopolymere aus durch Ester- oder Amidgruppen verknüpften Segmenten aus

A) carboxylgruppenhaltigem Polypropylen und Segmenten aus

B) flüssigkristallinen Polymeren ausgewählt aus vollaromatischen Polyestern, Polyestercarbonaten oder Polyesteramiden.

Die Verknüpfung der Blöcke mit den Komponenten A) und B) geschieht in der Weise, daß carboxylgruppenhaltiges Polypropylen mit einem Molekulargewicht (Mw) von 1000 bis 350 000, vorzugsweise 5000 bis 200 000, insbesondere 10 000 bis 100 000, mit den Blöcken aus vollaromatischen Polyestern, Polyestercarbonaten und Polyesteramiden oder mit den für den Aufbau der vollaromatischen Polyester, Polyestercarbonaten oder Polyesteramiden benötigten monomeren Bausteine unter geeigneten Reaktionsbedingungen so zur Reaktion gebracht werden, daß eine kovalente Bindung zwischen den Polypropylenblöcken und den Blöcken aus den flüssigkristallinen Polymeren, d.h. den vollaromatischen Polyestern, Polyestercarbonaten oder Polyesteramiden, gebildet wird. Der Gewichtsanteil der Polypropylen-Blöcke beträgt dabei 3 bis 97 % und der Gewichtsanteil der Blöcke aus flüssigkristallinen Polymeren 97 bis 3 %, bezogen auf das Gesamtgewicht der Blöcke. Vorzugsweise beträgt der Gewichtsanteil der Polypropylen-Blöcke 5 bis 70 % und der der Blöcke aus flüssigkristallinen Polymeren 95 bis 30 %.

Die erfindungsgemäßen thermoplastischen Formmassen stellen Blockpolymere mit unterschiedlicher Struktur dar. Sie können z.B. aus Blöcken aufgebaut werden, die Strukturen AB, ABA, BAB und $(AB)_x$ aufweisen, wobei x für eine Zahl >1, vorzugsweise für 2 bis 100, steht (A: Polypropylen-Segmente, B: Segmente aus den o.g. flüssigkristallinen Polymeren).

Komponente A) ist an sich bekannt (s. DE-OS 3 618 378).

Carbonsäuregruppen enthaltende Polypropylene können nach den US-Patenten 3 416 990, 3 437 550 oder 3 483 276 dadurch erhalten werden, daß kristallines oder amorphes Polypropylen mit einer ethylenischen ungesättigten Carbonsäure, Polycarbonsäure oder einem ungesättigten Carbonsäureester modifiziert wird.

Ein Beispiel für ein kristallines, carboxyliertes Polypropylen-Polymer, welches erfindungsgemäß verwendet werden kann, ist Hercoprime® G, erhältlich von Hercules, Inc. Bloomington, Delaware 19899.

Ein Beispiel für ein amorphes carboxyliertes Polypropylen-Polymer ist Epolene® E 43, erhältlich von Tennessee-Eastman Company, Tennessee.

Eine weitere Methode um carboxylgruppenhaltige Polypropylene zu erhalten, ist in der deutschen Offenlegungsschrift 3 618 378 beschrieben. Nach dieser Methode können entsprechend funktionalisierte Polypropylencarbonsäuren und Polypropylendicarbonsäuren erhalten werden.

Die als Komponente A) eingesetzten carboxylgruppenhaligen Polypropylene besitzen im allgemeinen ein Molekulargewicht von 1008 bis 350.000, bevorzugt von 2000 - 800.000, besonders bevorzugt von 4000 - 100.000. Der Carboxylgruppengehalt beträgt pro Molekül etwa 0,7 bis 2,5 Carboxylgruppen, bevorzugt 1,5 bis 2 Carboxylgruppen.

Als flüssigkristalline Polymere, die als Komponente B) bei den erfindungsgemäßen thermoplastischen Formmassen eingesetzt werden können, kommen vollaromatische Polyester, Polyestercarbonate und Polyesteramide in Frage (siehe L.L.Chapoy, Recend Advanes in LC-Polymers, Elsevier App. Sci. Publ. 1985).

Die flüssigkristallinen Polymeren können aus folgenden monomeren Bausteinen aufgebaut werden:

a) aromatische Hydroxycarbonsäuren
b) aromatische Aminocarbonsäuren
c) Diphenole
d) Aminophenole
e) aromatische Dicarbonsäuren und
f) gegebenenfalls Kohlensäure oder deren Derivate.

Als aromatische Hydroxycarbonsäuren a) kommen z.B. Verbindungen der Formeln

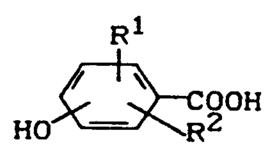
(I)

und

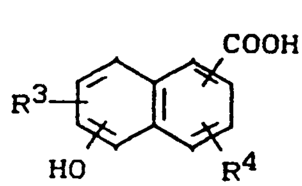
(II)

,

worin

R[1] bis R[4] $C_1$-$C_4$-Alkyl (vorzugsweise Methyl, Ethyl), $C_1$-$C_4$-Alkoxy (vorzugsweise Methoxy, Ethoxy), $C_6$-$C_{10}$-Aryl oder -Aryloxy (vorzugsweise Phenyl, Phenyloxy, Naphthyl, Naphthyloxy, Biphenyl, Biphenyloxy, Tolyl, Tolyloxy), $C_7$-$C_{12}$-Alkylaryl (vorzugsweise Benzyl), Halogen

(vorzugsweise Chlor und Brom) oder Wasserstoff bedeuten und die Valenzen zwischen Kern und Carboxylgruppe einen Winkel von 45 bis 180° bilden.

Bevorzugte aromatische Hydroxycarbonsäuren (a) sind z.B. 4-Hydroxy-3-methylbenzoesäure, 4-Hydroxy-3-phenylbenzoesäure, 4-Hydroxy-2-ethylbenzoesäure, 3-Chlor-4-hydroxybenzoesäure, 3-Brom-4-hydroxybenzoesäure, 4-Hydroxy-3-methoxybenzoesäure, 4-Hydroxybenzoesäure, 6-Hydroxy-naphthoesäure, 4-Hydroxy-3-phenoxybenzoesäure, 6-Hydroxy-5-chlor-2-naphthoesäure, 6-Hydroxy-5-methyl-2-naphthoesäure, 6-Hydroxy-5-methoxy-2-naphthoesäure, 6-Hydroxy-4,7-dichlor-2-napthoesäure und 2-Hydroxybenzoesäure, besonders bevorzugt sind 4-Hydroxybenzoesäure und 6-Hydroxynapthoesäure.

Als gegebenenfalls substituierte 3-Hydroxybenzoesäuren (e) werden z.B. genannt: 3-Hydroxy-4-methylbenzoesäure, 3-Hydroxy-4-phenylbenzoesäure, 3-Hydroxy-2-ethylbenzoesäure, 4-Chlor-3-hydroxybenzoesäure, 4-Brom-3-hydroxybenzoesäure, 3-Hydroxy-4-methoxybenzoesäure, 3-Hydroxy-4-phenoxybenzoesäure, 3-Hydroxy-2-methoxybenzoesäure und 3-Hydroxybenzoesäure.

Besonders bevorzugte aromatische 3-Hydroxycarbonsäuren (e) sind unsubstituierte Hydroxycarbonsäuen, wie 3-Hydroxybenzoesäure.

Als aromatische Aminocarbonsäuren b) kommen z.B. Verbindungen der Formeln

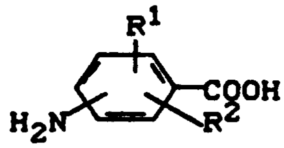

(III)

und

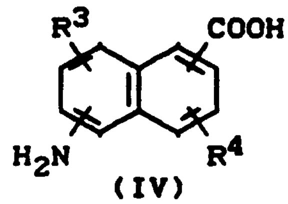

(IV)

worin

R[1] bis R[4] $C_1$-$C_4$-Alkyl (vorzugsweise Methyl, Ethyl), $C_1$-$C_4$-Alkoxy (vorzugsweise Methoxy, Ethoxy), $C_6$-$C_{10}$-Aryl oder -Aryloxy (vorzugsweise Phenyl, Phenyloxy, Naphthyl, Naphthyloxy, Biphenyl, Biphenyloxy, Tolyl, Tolyloxy), $C_7$-$C_{12}$-Alkylaryl (vorzugsweise Benzyl), Halogen (vorzugsweise Chlor und Brom) oder Wasserstoff bedeuten und die Valenzen zwischen Kern und Hydroxylgruppe sowie zwischen Kern und Carboxylgruppe einen Winkel von 45 bis 180° bilden,

in Frage.

Bevorzugte aromatische Aminocarbonsäuren sind 2-Aminobenzoesäure, 3-Aminobenzoesäure, 4-Aminobenzoesäure, 4-Chloranthranilsäure, 5-Chloranthranilsäure, 3-Amino-4-chlorbenzoesäure, 3-Amino-4-methylbenzoesäure, 4-Amino-3-methylbenzoesäure, 4-Amino-3-phenylbenzoesäure, 3-Brom-4-aminobenzoesäure, 4-Amino-3-methoxybenzoesäure, 6-Aminonapthoesäure, 4-Amino-3-phenoxybenzoesäure, 6-Amino-5-chlor-2-naphthoesäure, 6-Amino-5-methyl-2-naphthoesäure, 6-Amino-5-methoxy-2-naphthoesäure, 6-Amino-4,7-dichlor-2-naphthoesäure, besonders bevorzugt sind 4-Aminobenzoesäure und 6-Aminonaphthoesäure. Besonders bevorzugte aromatische Aminocarbonsäuren sind 4-Aminobenzoesäure, 3-Aminobenzoesäure und 6-Amino-2-naphthoesäure.

Als Diphenole c) kommen solche der Formel

HO - Z - OH (V)

in Frage, worin

Z einen zweiwertigen ein- oder mehrkernigen aromatischen Rest mit 6 bis 30 C-Atomen bedeutet, wobei Z derart gebaut ist, daß die beiden OH-Gruppen direkt an je ein C-Atom eines aromatischen Systems gebunden sind und die beiden Valenzen einen Winkel von 45 bis 180° bilden.

Die aromatischen Reste können durch 1 bis 4 $C_1$-$C_4$-Alkyl-, $C_1$-$C_4$-Alkoxy-, Phenyl-, Phenoxy-, Benzyl- oder Halogenreste (vorzugsweise Chlor und Brom) substituiert sein und umfassen neben Phenylen, Naphthylen und Biphenylen auch durch Sauerstoff, Schwefel, Carbonyl, Sulfonyl, $C_1$-$C_4$-Alkylen oder -Alkyliden, Cyclohexylen oder -hexyliden oder $-O(CH_2)_nO-$ mit n = 2-4 verbundene Phenylenreste.

Bevorzugte Diphenole b) sind z.B. Hydrochinon, 4,4'-Dihydroxydiphenyl, 4,4'-Dihydroxydiphenylether, 4,4'-Dihydroxydiphenylethan, 4,4'-Dihydroxydiphenoxyethan, 3,5'-Dihydroxydiphenyl, 3,5'-Dihydroxydiphenylether, 1,5-Dihydroxynaphthalin, 2,6-Dihydroxynaphthalin, 1,4-Dihydroxynaphthalin, Chlorhydrochinon, Bromhydrochinon, Methylhydrochinon, Phenylhydrochinon, Ethylhydrochinon, 2,2'-Dimethyl-4,4'-dihydroxydiphenyl, 3,3',5,5'-Tetramethyl-4,4'-dihydroxydiphenyl, 3,5'-Dimethoxy-4,4'-dihydroxydiphenylether, 1,2-(2-Chlor-4-hydroxyphenoxy)ethan, 4-Methoxy-2,6-dihydroxynaphthalin, Resorcin, 3,4'-Dihydroxydiphenyl, 3,4'-Dihydroxydiphenylether, 3,4'-Dihydroxydiphenoxyethan, 1,3-Dihydroxynaphthalin, 1,6-Dihydroxnaphthalin, 1,7-Dihydroxynaphthalin, 2,7-Dihydroxynaphthalin, 4-Chlorresorcin, 4-Bromresorcin, 4-Methylresorcin, 4-Phenylresorcin, 4-Ethoxyresorcin, 2,5-Dichlor-1,6-dihydroxynaphthalin und 4-Methoxy-2,7-dihydroxynaphthalin.

Besonders bevorzugte Diphenole b) sind Hydrochinon und 4,4'-Dihydroxydiphenyl.

Als Aminophenole d) kommen solche der Formel

$HO - Z - NH_2$ (VI)

in Frage, worin

Z einen zweiwertigen ein- oder mehrkernigen aromatischen Rest mit 6 bis 30 C-Atomen bedeutet, wobei Z derart gebaut ist, daß die beiden OH-Gruppen direkt an je ein C-Atom eines aromatischen Systems gebunden sind und die beiden Valenzen einen Winkel von 45 bis 180° bilden.

Die aromatischen Reste können durch 1 bis 4 $C_1$-$C_4$-Alkyl-, $C_1$-$C_4$-Alkoxy-, Phenyl-, Phenoxy, Benzyl- oder Halogenreste (vorzugsweise Chlor und Brom) substituiert sein und umfassen neben Phenylen, Naphthylen und Biphenylen auch durch Sauerstoff, Schwefel, Carbonyl, Sulfonyl, $C_1$-$C_4$-Alkylen oder -Alkyliden, Cyclohexylen oder -hexyliden oder $-O(CH_2)_nO-$ mit n = 2-4 verbundene Phenylenreste.

Bevorzugte Aminophenole sind: 3-Aminophenol, 5-Amino-2-chlorphenol, 4-Aminophenol, 3-Amino-2-methylphenol, 3-Amino-4-methylphenol, 5-Amino-1-naphthol, 6-Amino-1-naphthol, 5-Amino-2-naphthol, 7-Amino-2-naphthol, 8-Amino-2-naphthol, 6-Amino-2-naphthol, 4-Amino-1-hydroxybiphenyl.

Als aromatische Dicarbonsäuren e) kommen solche der Formel

HOOC - A - COOH (VII)

in Frage, worin

A einen bivalenten aromatischen Rest mit 6 bis 24 C-Atomen, vorzugsweise mit 6 bis 16 C-Atomen bedeutet, wobei die beiden Valenzen einen Winkel von 45 bis 180° bilden. Die bivalenten aromatischen Reste können durch 1 bis 4 $C_1$-$C_4$-Alkyl-, $C_1$-$C_4$-Alkoxy-, Phenyl-, Phenoxy-, Benzyl- oder Halogenreste (vorzugsweise Chlor und Brom) substituiert sein und umfassen neben Phenylen, Naphthylen und Biphenylen auch durch Sauerstoff, Schwefel, Carbonyl, Sulfonyl, $C_1$-$C_4$-Alkylen oder -Alkyliden, Cyclohexylen oder -hexyliden oder $-O(CH_2)_nO-$ mit n = 1-4 verbundene Phenylenreste.

Bevorzugte aromatische Reste sind z.B. 1,4-Phenylen, 1,4-Naphthylen oder 4,4'-Biphenylen, worin die beiden Bindungen sich koaxial in entgegengesetzte Richtungen erstrecken, oder 1,5-Naphthylen, 2,6-Naphthylen oder 3,5'-Biphenylen, worin die beiden in entgegengesetzte Richtungen zeigenden Bindungen parallel zueinander verschoben sind, sowie 1,3-Phenylen, 1,3-, 1,6-, 1,7- oder 2,7-Naphthylen oder 3,4'-Biphenylen, worin die beiden Bindungen nicht an benachbarten Atomen lokalisiert sind und sich nicht koaxial oder parallel verschoben in entgegengesetzte Richtungen erstrecken.

Bevorzugte aromatische Dicarbonsäuren e) sind z.B. 1,4-Naphthalindicarbonsäure, 1,5-Naphthalindicarbonsäure, 2,6-Naphthalindicarbonsäure, Biphenyl-4,4'-dicarbonsäure, Biphenyl-3,3'-dicarbonsäure, Diphenoxyethan-4,4'-dicarbonsäure, Diphenylether-4,4'-dicarbonsäure, Methylterephthalsäure, Methoxyterephthalsäure, Chlorterephthalsäure, 4-Chlornaphthalin-2,7-dicarbonsäure, 1,3-Naphthalindicarbonsäure, 1,6-Naphthalindicarbonsäure, 1,7-Naphthalindicarbonsäure, 2,7-Naphthalindicarbonsäure, Biphenyl-3,4'-dicarbonsäure, Diphenylether-3,4'-dicarbonsäure, 4-Methylisophthalsäure, 5-Methylisophthalsäure, Diphenylether-4,4'-dichlor-3,3'-dicarbonsäure, Iso- und Terephthalsäure.

Besonders bevorzugte aromatische Dicarbonsäuren e) sind Iso- und Terephthalsäure.

Als Derivate zum Einbau der f) Carbonatgruppen seien genannt: Diarylcarbonate, wie Diphenylcarbonat, Ditolylcarbonat, Phenyl-tolyl-carbonat und Dinaphthylcarbonat, Dialkylcarbonate, wie Diethylcarbonat, Dimethylcarbonat, Dimethyldicarbonat und Diethyldicarbonat sowie Glykolcarbonat.

Ein bevorzugtes Derivat zum Einbau der f) Carbonatgruppen ist Diphenylcarbonat.

Als Endgruppen können die erfindungsgemäßen Polyestercarbonate H, OH, $OC_6H_5$ oder von Kettenabbrechern herrührende Reste enthalten.

Herstellungsverfahren für flüssigkristalline Polymere (LCP) sind in der Patentliteratur beschrieben. Flüssigkristalline Polyester und Polyesteramide werden durch Schmelzumesterung nach dem Acetatverfahren hergestellt, wobei Ein- und Zweistufenprozesse geläufig sind: EP 0 102 719, 134 204, US 520 043, US 468 240, EP 63 880 und 67 032. LC-Polyester und Polyestercarbonate können auch durch Schmelzumesterung nach dem Phenylesterverfahren hergestellt werden: US 4 371 600, 4 435 561, EP 0 015 856, 132 637 und DE 2 704 315.

Die erfindungsgemäßen thermoplastischen Blockcopolymere werden, wie bereits erwähnt, durch Umsetzung von carboxylgruppenhaltigen Polypropylenen mit den flüssigkristallinen Polymeren in Form von Blöcken kondensiert. Statt der flüssigkristallinen Polymeren können die entsprechend funktionalisierten Polypropylene auch mit den monomeren Bausteinen der flüssigkristallinen Polymeren kondensiert werden. Durch die Kondensationsreaktion werden die Polypropylensegmente mit den Segmenten aus flüssigkristallinen Polymeren über phenolische OH-Gruppen als Ester oder über NH-Gruppen als Amidgruppen verknüpft.

Die Verknüpfung der Blöcke A und B durch Ester- oder Amidgruppen erfolgt durch Kondensationsverfahren, wobei Polypropylen-LC-Polyester- und Polypropylen-LC-Polyesteramide, Blockcopolymere, vorzugsweise nach dem Acetat-Schmelzumesterungs-Verfahren, entweder aus den Monomerbausteinen oder aus bereits vorgefertigten Oligomeren, hergestellt werden.

Polypropylen-LC-Polyestercarbonat- und auch Polypropylen-LC-Polyester-Blockcokondensate werden durch Schmelzumesterung nach dem Diphenylcarbonat-Verfahren aus geeigneten Monomerbausteinen über die in situ gebildeten Phenylester oder aus bereits vorgebildeten Phenylestern hergestellt.

Es ist ebenfalls möglich, bereits vorgefertigte Oligoester- bzw. Oligoestercarbonatsegmente einzusetzen.

Weiterhin ist es möglich, die Schmelzumesterung von hochmolekularen LC-Polymeren mit geeigneten Polypropylensegmenten auf einem Extruder durchzuführen.

Die Kondensation der Blöcke A und B miteinander erfolgt bei Temperaturen von 100 bis 350 °C, vorzugsweise bei 200 bis 330 °C.

Die üblichen Katalysatoren (s. hierzu z.B. EP 0 0 132 637) zur Herstellung von Polykondensaten können in Mengen von 0,0005 bis 5 %, bezogen auf die Gesamtmenge an Einsatzkomponenten, zugegeben werden.

Die erfindungsgemäßen thermoplastischen Formmassen können beim Erhitzen anisotrope Schmelzen bilden, was sich auf ihre Anwendung, z.B. beim Abmischen mit anderen Polymeren vorteilhaft auswirken kann. Die erfindungsgemäßen thermoplastischen Formmassen weisen je nach Blocklänge und Blockgehalt unterschiedliche Eigenschaftsspektren auf. So zeigen die erfindungsgemäßen Blockcokondensate mit großer Polypropylenblocklänge (entsprechend hohem Molgewicht) und hohen Gehalten an Polypropylen-Sequenzen Propylenpolymerähnliche Eigenschaften, wobei durch den Einbau von ca. 3 bis 30 % Blöcken aus flüssigkristallinen Polymeren die Fließfähigkeit, die Kerbschlagzähigkeit und die Wärmeformbeständigkeit erhöht wird. Eine besonders ausgeprägte Strukturviskosität kennzeichnet erfindungsgemäße thermoplastische Formmassen mit einem Gehalt von ca. 30 bis 60 % an Polypropylenblöcken und ca. 40 bis 70 % an Blöcken aus flüssigkristallinen Polymeren.

Die erfindungsgemäßen thermoplastischen Formmassen können als Kompatibilitätsverbesserer oder Dispergatoren in ansonsten unverträglichen oder schlecht verträglichen thermoplastischen Polymermischungen, wie Polypropylen/LCP-Blends verwendet werden.

Die Wirkung der erfindungsgemäßen thermoplastischen Formmassen als Polymerdispergator zeigt sich auch bei der lichtmikroskopischen Betrachtung von Polypropylen/LCP-Blends. Während bei diesen Blends ohne Verwendung von Polymerdispergatoren eine unregelmäßige, aus mehr oder weniger großen Einheiten bestehende Verteilung beobachtet wird, läßt sich durch Zusatz von ca. 10 % der erfindungsgemäßen thermoplastischen Formmassen eine Vereinheitlichung und Verkleinerung der Phasen feststellen.

Die erfindungsgemäßen thermoplastischen Formmassen mit Gehalten von ca. 97 bis 70 % an Blöcken aus flüssigkristallinen Polymeren zeigen nach der Verarbeitung aus der Schmelze ein besonders gute Rekristallisationsvermögen. Das Fließverhalten der Produkte ist gut, so daß auch komplexe Formteile gut gefüllt werden.

Die erfindungsgemäßen thermoplastischen Formmassen können außerdem Verwendung finden bei der Herstellung von

- elektrotechnischen Artikeln, wie Isolatoren, gedruckten Schaltungen, Steckkontakten, Armaturenteilen, Umhüllungen von integrierten Schaltungen,
- Teilen chemisch-technischer Apparate, wie Rohren, Behälterauskleidungen, Rotoren, Gleitlagern, Dichtungen,
- Teilen der Flugzeuginnenausstattung,
- Teilen medizinisch-technischer Geräte und Bauteilen von Klimaanlagen sowie Ventilteilen.

Die erfindungsgemäßen thermoplastischen Formmassen können auch als Überzugs- oder Beschichtungsmaterial (pulverförmig oder dispergiert) verwendet werden. Auch zur Herstellung von verstärkten oder gefüllten Formmassen mit einem Verstärkungs- bzw. Füllstoffgehalt von ca. 5 bis 75 Gew.-%, bezogen auf verstärkte oder gefüllte Formmassen, sind sie geeignet.

Weiterer Gegenstand der Erfindung ist also die Verwendung der neuen thermoplastischen Formmassen zur Herstellung von Formkörpern, Filamenten, Fasern und Filmen.

Herstellung der Poly-α-alkyl-olefin-Blöcke

Herstellung der Polypropylen (PP)-Carbonsäuren (nach der deutschen Offenlegungsschrift 36 18 378)

In einem Extruder (ZSK 32) mit einem Länge ndurchmesser-Verhältnis LD = 40 werden 6000 g/h isotaktisches Polypropylen mit einem mittleren Molekulargewicht von 340.000 eindosiert, auf 250 bis 260 °C erhitzt und mit 1500 Nl/h Luft unter Druck vermischt (Nl/h = Normalliter/Stunde).

Nach der Zone zur Luftdosierung wird die Zylindertemperatur des Extruders auf 210 °C gehalten. In der Entgasungszone tritt die überschüssige Luft aus, und das abgebaute Polypropylen wird an der Düse abgesponnen.

Man erhält carboxyfunktionalisiertes Polypropylen mit einem Molekulargewicht von ca. 70.000 und einer Funktionalität von ca. 2. Die Säurezahl (SZ) beträgt demnach ca. 1,5 mg KOH/g Substanz.

Herstellung der PP-Carbonsäurephenylester

600 g Diphenylcarbonat, 420 g eines carboxyfunktionalisierten Polypropylens (Mw 70.000; SZ ca. 1,5) und 2,6 g Imidazol werden bis zum Ende der $CO_2$-Entwicklung bei T = 180 °C gerührt. Die Reaktionstemperatur wird für 30 min. auf T = 250 °C erhöht. Der Phenylester wird nach dem Abkühlen der Schmelze auf T = 160 °C durch Eingießen in 4 l Methanol ausgefällt, abgesaugt, phenolfrei gewaschen und getrocknet.

Beispiel 1

Herstellung von Polypropylen/Flüssigkristalline (LG)-Polyester-Blockcopolymeren

In ein 1 l-Planschliffgefäß mit Planschliffdecken, Rührer, Stickstoffeinleitung und einem Destillationsaufsatz, der mit einem Kühler verbunden war, wurden die in Tabelle 1 zusammengefaßten Substanzen sowie 0,1 g Magnesiumacetat (wasserfrei) und 0,15 g Antimontrioxid eingewogen.

Unter Stickstoffatmosphäre wurde mittels Salzbad auf 170 °C erhitzt. Sobald die Destillation von Essigsäure nachließ (nach ca. 45 Min.), wurde die Temperatur im Reaktionsgefäß im Verlauf einer Stunde auf 250 °C und im Verlauf einer weiteren Stunde auf 330 °C erhöht. Nach Beendigung der Destillation wurde der Druck im Verlauf von 30 Min. bis auf ca. 1 mbar gesenkt.

Während dieser Vakuumphase nahm die Viskosität der entstandenen Polymerschmelze stark zu. Die Schmelze wurde daher langsamer gerührt. Am Ende dieser Phase war die Gesamtmenge an Essigsäure (enthält restliches Acetanhydrid) aufgefangen worden.

Die erhaltenen hellbraunen Produkte wurden gemahlen und bei 250 °C einer Festphasennachkondensation unterworfen (bei einem Vakuum von ca. 1 mbar/24 Stunden). Im Bereich von 250 bis 350 °C wurde eine optisch anisotrope Schmelzphase beobachtet.

Tabelle 1

| | | |
|---|---|---|
| 1a) | 296,30 g | p-Hydroxybenzoesäure |
| | 109,0 g | Hydrochinon |
| | 30,7 g | 4,4'-Dihydroxydiphenyl |
| | 191,40 g | Isophthalsäure |
| | 454,80 g | Acetanhydrid |
| | 60,86 g | carboxyliertes Polypropylen, Mw 70.000, SZ 1,5 |
| 1b) | 296,30 g | p-Hydroxybenzoesäure |
| | 109,00 g | Hydrochinon |
| | 30,7 g | 4,4'-Dihydroxydiphenyl |
| | 190,8 g | Isophthalsäure |
| | 454,8 g | Acetanhydrid |
| | 136,90 g | carboxyliertes Polypropylen, Mw 70.000, SZ 1,5 |
| 1c) | 296,30 g | p-Hydroxybenzoesäure |
| | 109,0 g | Hydrochinon |
| | 30,7 g | 4,4'-Dihydroxydiphenyl |
| | 190,04 g | Isophthalsäure |
| | 234,70 g | carboxyliertes Polypropylen, Mw 70.000, SZ 1,5 |
| | 454,8 g | Acetanhydrid |

Beispiel 2

Herstellung von Polypropylen/LC-Polyesteramid-Blockcopolymeren

In ein 1 l-Planschliffgefäß mit Planschliffdeckel, Rührer, Stickstoffeinleitung und einem Destillationsaufsatz, der mit einem Kühler verbunden war, wurden die in Tabelle 2 zusammengefaßten Substanzen sowie 0,1 g Magnesiumacetat (wasserfrei) und 0,15 g Antimontrioxid eingewogen.

Unter Stickstoffatomsphäre wurde mittels Salzbad auf 170°C erhitzt. Sobald die Destillation von Essigsäure nachließ (nach ca. 45 Min.), wurde die Temperatur im Reaktionsgefäß im Verlauf einer Stunde auf 250°C und im Verlauf einer weiteren Stunde auf 330°C erhöht. Nach Beendigung der Destillation wurde der Druck im Verlauf von 30 Minuten bis auf ca. 1 mbar gesenkt.

Während dieser Vakuumphase nahm die Viskosität der entstandenen Polymerschmelze stark zu. Die Schmelze wurde daher langsamer gerührt. Am Ende dieser Phase war die Gesamtmenge an Essigsäure (enthält restliches Acetanhydrid) aufgefangen worden.

Die erhaltenen hellbraunen Produkte wurden gemahlen und bei 250°C einer Festphasennachkondensation unterworfen (bei einem Vakuum von ca. 1 mbar/24 Stunden). Im Bereich von 250 bis 350°C wurde eine optisch anisotrope Schmelzphase beobachtet.

Tabelle 2

| | | |
|---|---|---|
| 2a) | 273,47 g | p-Hydroxybenzoesäure |
| | 22,63 g | p-Aminobenzoesäure |
| | 109,00 g | Hydrochinon |
| | 30,70 g | 4,4'-Dihydroxybiphenyl |
| | 191,40 g | Isophthalsäure |
| | 454,80 g | Acetanhydrid |
| | 60,8 g | carboxyliertes Polypropylen, Mw 70.000, SZ 1,5 |
| 2b) | 273,47 g | p-Hydoxybenzoesäue |
| | 22,63 g | p-Aminobenzoesäure |
| | 109,00 g | Hydrochinon |
| | 30,70 g | 4,4'-Dihydroxybiphenyl |
| | 191,40 g | Isophthalsäure |
| | 454,80 g | Acetanhydrid |
| | 136,9 g | carboxyliertes Polypropylen, Mw 70.000, SZ 1,5 |
| 2c) | 273,47 g | p-Hydroxybenzoesäure |
| | 22,63 g | p-Aminobenzoesäure |
| | 109,00 g | Hydrochinon |
| | 30,70 g | 4,4'-Dihydroxybiphenyl |
| | 191,40 g | Isophthalsäure |
| | 454,80 g | Acetanhydrid |
| | 234,7 g | carboxyliertes Polypropylen, Mw 70.000, SZ 1,5 |

Beispiel 3

Herstellung von Polypropylen/LC-Polyestercarbonat-Blockcopolymeren

In einem Reaktionsgefäß mit Rührer, Kolonne und Destillierbrücke wurden die in Tabelle 3 zusammengefaßten Substanzen zusammen mit 1,5 g Imidazol eingewogen.

Bei einer Innentemperatur von 160 °C begann die $CO_2$-Abspaltung. Die Innentemperatur wurde im Verlauf von 15 Min. auf 180 °C erhöht, 60 Min. konstant gehalten, auf 220 °C erhöht und bis zum Ende der $CO_2$-Abspaltung konstant gehalten.

Das Reaktionsgemisch wurde auf 250 °C aufgeheizt und der Druck im Reaktor schrittweise bis auf 30 mbar erniedrigt. Nach 1 h hatte die Destillationsgeschwindigkeit soweit nachgelassen, daß die Innentemperatur auf 275 °C und anschließend auf 300 °C erhöht werden konnte. Nachdem die Phenolabspaltung weitgehend abgeschlossen war, wurde der Druck im Reaktor auf 0,2 mbar reduziert. Nach 1 h unter diesen Kondensationsbedingungen war die Reaktion beendet.

Die erhaltenen hellbraunen Produkte wurden gemahlen und bei 250 °C einer Festphasenkondensation unterworfen (bei einem Vakuum von 1 mbar/24 Stunden). Im Bereich von 250 bis 350 °C wurde eine optisch anisotope Schmelzphase beobachtet.

Tabelle 3

| | | | |
|---|---|---|---|
| 3a) | 305,00 | g | Hydroxybenzoesäure |
| | 112,60 | g | Hydrochinon |
| | 31,60 | g | 4,4'-Dihydroxybiphenyl |
| | 28,20 | g | Isophthalsäure |
| | 779,60 | g | Diphenylcarbonat |
| | 52,03 | g | Polypropylencarbonsäurephenylester |
| | 1,5 | g | Imidazol |
| 3b) | 112,94 | g | Hydrochinon |
| | 117,07 | g | Polypropylencarbonsäurephenylester |
| | 305,00 | g | Hydroxybenzoesäure |
| | 31,60 | g | 4,4'-Dihydroxybiphenyl |
| | 28,20 | g | Isophthalsäure |
| | 779,60 | g | Diphenylcarbonat |
| | 1,5 | g | Imidazol |
| 3c) | 113,38 | g | Hydrochinon |
| | 200,68 | g | Polypropylencarbonsäurephenylester |
| | 305,00 | g | Hydroxybenzoesäure |
| | 31,60 | g | 4,4'-Dihydroxybiphenyl |
| | 28,20 | g | Isophthalsäure |
| | 779,60 | g | Diphenylcarbonat |
| | 1,5 | g | Imidazol |
| 3d) | 114,81 | g | Hydrochinon |
| | 468,24 | g | Polypropylencarbonsäurephenylester |
| | 305,00 | g | Hydroxybenzoesäure |
| | 31,60 | g | 4,4'-Dihydroxybiphenyl |
| | 28,20 | g | Isophthalsäure |
| | 779,60 | g | Diphenylcarbonat |
| | 1,5 | g | Imidazol |

| | | | |
|---|---|---|---|
| 3e) | 118,14 | g | Hydrochinon |
| | 1092,50 | g | Polypropylencarbonsäurephenylester |
| | 305,00 | g | Hydroxybenzoesäure |
| | 31,60 | g | 4,4'-Dihydroxybiphenyl |
| | 28,20 | g | Isophthalsäure |
| | 779,60 | g | Diphenylcarbonat |
| | 1,5 | g | Imidazol |

Beispiel 4

Herstellung PP/LC-Polyestercarbonat-Blockpolymeren durch Schmelzumesterung auf einem Extruder

4,0 kg eines LC-Polyestercarbonats entsprechend der Grundzusammensetzung aus Beispiel 3b) und 1,0 kg des Polypropylencarbonsäurephenylesters werden bei T = 330 °C auf einer ZSK 32 (Doppelwellenextruder mit einem Ausdampfdom) compoundiert.

Das Produkt wird als Strang abgezogen, in einem Wasserbad (1 bis 3 m) abgekühlt und granuliert.

Polypropylen und die Phenylester der carboxylierten Polypropylene sind im Gegensatz zu den LC-Polymeren gut in unpolaren Lösungsmitteln, wie heißem Toluol oder Xylol, löslich. Zur Prüfung auf das chem. Ankopplungsverhalten dieser unverträglichen Blöcke miteinander wurden die Produkte fein gemahlen und 48 h mit heißem Xylol extrahiert, um nicht chemisch angekoppelte PP-Blöcke aus dem Produkt herauszulösen. Extrahierbar waren lediglich geringe Mengen (ca. 0,5 %) nicht carboxyliertes Polypropylen, das als Nebenprodukt in den Carboxylierungsprodukten enthalten ist.

In allen Fällen lag der Ankopplungsgrad der PP-Blöcke über 99 %. Einige wichtige thermische Produkteigenschaften von ausgewählten Produkten sind in Tabelle 4 zusammengefaßt.

Beispiel 5 (Vergleichsbeispiel)

Analog zum Beispiel 4 werden 4 kg eines Polyestercarbonats entsprechend der Grundzusammensetzung aus Beispiel 3b) und 1 kg eines handelsüblichen Polypropylen auf einer ZSK 32 (Doppelwellenextruder mit Ausdampfdom) compoundiert.

Das Produkt wird als Strang abgezogen, in einem Wasserbad abgekühlt und granuliert.

**Tabelle 4**

| Produkt | Tg (°C) | ΔHU (J/g) | Tu (°C) |
|---|---|---|---|
| PP/LC-Polyester-Blockcokondensate | | | |
| 1a | 121 | 6,1/4,3 | 148,9/287,5 |
| 1b | 123 | 10,7/4,0 | 148,2/289,3 |
| 1c | 119 | 35 /3,8 | 149,4/287,8 |
| PP/LC-Polyesteramid-Blockcokondensate | | | |
| 2a | 129 | 6,2/4,6 | 149,1/304,6 |
| 2b | 128 | 11,7/4,3 | 147,1/305,1 |
| 2c | 131 | 34,3/4,5 | 150,0/302,1 |
| PP/LC-Polyestercarbonat-Blockcokondensate | | | |
| 3a | 93 | 10,1/8,9 | 148,3/225,8 |
| 3b | 90 | 18,4/10,3 | 148,6/225,7 |
| 3c | 95 | 37,1/9,8 | 149,1/224,9 |

Die Phasenumwandlung der Polypropylenblöcke liegt zwischen 140 bis 150 °C, die der LC-Blöcke werden bei höheren Temperaturen gefunden:

| | |
|---|---|
| LC-Polyester | 288 °C |
| LC-Polyesteramid | 304 °C |
| LC-Polyestercarbonat | 225 °C. |

Die mechanischen Eigenschaften einiger ausgewählter Produkte sind in Tabelle 5 zusammengefaßt. Es fällt auf, daß bei hohen Gehalten an LC-Blöcken die Eigenschaften der LC-Phase dominieren. Ab ca. 20 bis 30 % an PP-Blockgehalten gehen die Eigenschaften allmählich in Richtung reines Polypropylen.

Tabelle 5

| Produkt | $a_n/a_k$ | $_R$ | $E_Z$ | $_B$ | $E_B$ | HDT-A |
|---|---|---|---|---|---|---|
| 1b | 24/20 | 104 | 12.700 | 110 | 7.800 | 125 |
| 2b | 33/18 | 130 | 11.200 | 175 | 10.300 | 138 |
| 3a | 43/35 | 136 | 11.700 | 110 | 8.200 | 148 |
| 3b | 44/30 | 147 | 10.600 | 102 | 7.500 | 142 |
| 3c | 25/20 | 100 | 6.400 | 75 | 3.220 | 125 |
| 4 | 35/30 | 140 | 10.000 | 100 | 7.600 | 138 |
| 5 | 4/4 | 35 | 2.000 | 22 | 2.530 | 90 |

$a_n/a_k$: Schlag- und Kerbschlagzähigkeit ($kJ/m^2$)
$_R$: Reißfestigkeit (MPa)
$E_Z$: Zug-E-Modul (MPa)
$_B$: Biegefestigkeit (MPa)
$E_B$: Biege-E-Modul (MPa)

## Patentansprüche

**1.** Thermoplastische Blockcopolymere aus durch Ester- oder Amidgruppen verknüpften Segmenten aus
A) Carboxylgruppenhaltigem Polypropylen und Segmenten aus
B) flüssigkristallinen Polymeren ausgewählt aus vollaromafischen Polyestern, Polyestercarbonaten oder Polyesteramiden.

**2.** Thermoplastische Blockcopolymere nach Anspruch 1, dadurch gekennzeichnet, daß der Anteil des in Blockform vorliegenden carboxylgruppenhaltigen Polypropylens 3 bis 97 Gew.-% und der Anteil der in Blockform vorliegenden Komponente B) 97 bis 3 Gew.-% beträgt, bezogen auf das Gesamtgewicht der Blöcke.

**3.** Verfahren zur Herstellung von thermoplastischen Blockcopolymeren aus durch Ester- oder Amidgruppen verknüpften Segmenten gemäß Anspruch 1, dadurch gekennzeichnet daß die chemische Verknüpfung der Komponenten A und B zu Blockcokondensaten durch Vermischen der Komponenten und Erhitzen auf 200 bis 350 °C bewerkstelligt wird.

**4.** Verfahren zur Herstellung der thermoplastischen Blockcopolymeren gemäß Anspruch 1, dadurch gekennzeichnet, daß die Komponente B in Gegenwart der Komponente A durch Umsetzung entsprechender Monomerverbindungen nach dem Acetat- oder Diphenylcarbonat-Umesterungsverfahren hergestellt wird, wobei gleichzeitig Komponente A mit Komponente B zu Blockcokondensaten verknüpft wird.

**5.** Verwendung der thermoplastischen Blockcopolymere nach Anspruch 1 bis 4 als Kompatibilitätsverbesserer oder Dispergatoren in ansonsten unverträglichen oder schlecht verträglichen thermoplastischen Polymermischungen oder zur Herstellung von Formkörpern, Filamenten, Fasern und Filmen.

## Claims

**1.** Thermoplastic block copolymers of segments - linked by ester or amide groups - of
A) carboxyfunctional polypropylene and segments of
B) liquid crystalline polymers selected from fully aromatic polyesters, polyester carbonates or polyesteramides.

2. Thermoplastic block copolymers as claimed in claim 1, characterized in that the percentage content of carboxyfunctional polypropylene present in block form is 3 to 97% by weight and the percentage content of component B) present in block form is 97 to 3% by weight, based on the total weight of the blocks.

3. A process for the production of the thermoplastic block copolymers of segments linked by ester or amide groups claimed in claim 1, characterized in that components A and B are chemically linked to form block co-condensates by mixing the components and heating them to 200 to 350 ° C.

4. A process for the production of the thermoplastic block copolymers claimed in claim 1, characterized in that component B is prepared in the presence of component A by reaction of corresponding monomer compounds by the acetate or diphenyl carbonate transesterification process, component A being simultaneously linked to component B to form block co-condensates.

5. The use of the thermoplastic block copolymers claimed in claims 1 to 4 as compatibilizers or dispersants in otherwise incompatible or poorly compatible thermoplastic polymer blends or for the production of mouldings, filaments, fibers and films.

**Revendications**

1. Copolymères séquencés thermoplastiques formés de segments liés par des groupes ester ou amide dérivés
   A) d'un polypropylène porteur de groupes carboxyle, et de segments dérivés
   B) de polymères à cristaux liquides, choisis parmi des polyesters, des polyester-carbonates ou des polyesteramides entièrement aromatiques.

2. Copolymères séquencés thermoplastiques suivant la revendication 1, caractérisés en ce que la proportion de polypropylène porteur de groupes carboxyle présent sous la forme séquencée va de 3 à 97 % en poids et la proportion de composants B) présents sous la forme séquencée va de 97 à 3 % en poids, par rapport au poids total des séquences.

3. Procédé de production de copolymères séquencés thermoplastiques formés de segments liés par des groupes ester ou amide suivant la revendication 1, caractérisé en ce que la liaison chimique des composants A et B pour former des co-condensats séquencés est accomplie par mélange des composants et chauffage à une température de 200 à 350 ° C.

4. Procédé de production des copolymères séquencés thermoplastiques suivant la revendication 1, caractérisé en ce que le composant B est produit en présence du composant A par réaction de composés monomères correspondants selon le procédé de transestérification d'acétate ou de carbonate de diphényle, le composant A étant en même temps lié avec le composant B en co-condensats séquencés.

5. Utilisation des copolymères séquencés thermoplastiques selon les revendications 1 à 4 comme agents améliorant la compatibilité ou agents dispersants dans des mélanges de polymères thermoplastiques autrement incompatibles ou peu compatibles ou pour la production de corps façonnés, de filaments, de fibres et de films.